# EUROPEAN PATENT APPLICATION

(11) **EP 4 520 955 A1**
(43) Date of publication of application: **12.03.2025**
(21) Application number: 23196257.2
(22) Date of filing: 08.09.2023
(51) Int. Cl.: F03D 1/06

(54) **WIND TURBINE BLADE JOINTS HAVING REMOVABLE COVERS AND MAGNETIC SYSTEMS**

(71) Applicant: LM Wind Power A/S, 6000 Kolding (DK)
(72) Inventor: MIN JØRGENSEN, Ya, 6000 KOLDING (DK); JESPER HASSELBALCH, Garm, 6000 KOLDING (DK)
(74) Representative: ZBM Patents - Zea, Barlocci & Markvardsen

(57) **Abstract**

In a first aspect, a wind turbine blade joint between a first blade segment and a second blade segment is provided. The first blade segment portion comprises a first connecting portion including a first connecting edge. The second blade segment portion comprises a second connecting portion including a second connecting edge. The wind turbine blade joint further comprises an access window defined between the first connecting edge and the second connecting edge. In addition, the wind turbine blade joint comprises a connector connecting the first connecting portion to the second connecting portion, wherein the connector is accessible from outside the wind turbine blade through the access window. Furthermore, the wind turbine blade joint comprises a removable cover for covering the access window; and a magnetic system arranged between the cover and the connector, wherein the magnetic system is configured to create a magnetic field to attract the cover to the connector when the cover covers the access window. In a further aspect, a wind turbine blade comprising a wind turbine blade joint according to any of the examples herein is provided. In yet a further aspect, a method for joining a first blade segment to a second blade segment.

## Description

The present disclosure relates to wind turbine blade joints between a first blade segment and a second blade segment, wherein the wind turbine blade joint comprises a removable cover and a magnetic system. The present disclosure further relates to wind turbine blades having these wind turbine blade joints and to methods for joining a first blade segment to a second blade segment.

### BACKGROUND

Modern wind turbines are commonly used to supply electricity to the electrical grid. Wind turbines of this kind generally comprise a rotor with a rotor hub and a plurality of wind turbine blades. The rotor is set into rotation under the influence of the wind on the blades. The rotation of the rotor shaft drives the generator rotor either directly ("directly driven") or through the use of a gearbox. The gearbox (if present), the generator, and other systems are usually mounted in a nacelle on top of a wind turbine tower.

Wind turbine blades are generally made from fiber-reinforced polymers or plastics (FRP's), which are composite materials consisting of a polymer matrix and reinforced with fibers. The fibers are usually glass or carbon and provide longitudinal stiffness and strength. Wind turbine blades are commonly manufactured by joining two blade shell parts made from fiber-reinforced polymers, e.g. glass or carbon fiber reinforced polymers. For example, a pressure side blade shell may be bonded to a suction side blade shell through joining lines along the leading edge and the trailing edge. These blade shell parts may be molded using a resin infusion technology, e.g. Resin Transfer Molding (RTM) or Vacuum Assisted Resin Transfer Molding (VARTM), or a prepreg technology.

A load-carrying structure may be arranged between the pressure side blade shell and the suction side blade shell. The load-carrying structure may comprise opposite spar caps bonded to the respective blade shell.

In recent times there has been a trend to increase the size of wind turbine blades to capture more wind. Larger blades may involve larger molds during manufacturing and may complicate transporting the blades to the wind turbine site.

Wind turbine blades may be manufactured in several segments to reduce transporting constraints and simplify molding operations. These blade segments may be transported to the wind turbine site and assembled at this site. Wind turbine blades resulting from assembling several blade segments are generally called modular or segmented blades.

A connector may be used for joining these blade segments to form the entire wind turbine blade. Joining these blade segments may involve joining the load-carrying structure, such as spar beams, shear webs or other internal components, of each of the blade segments. For example, a bolted connection may be used for joining the spar caps and/or the shear webs of two blade segments. In some examples, the connector may comprise bolts having one end secured on one blade segment and the opposite end secured to the other blade segments.

To provide a smooth and aerodynamic transition between two blade segments, the joint may be covered with a cover or a fairing. The covers or fairings are attached to the blade shells of the blade segments. Screws may be employed for attaching the covers to the blade shells. The screws are generally either glued or riveted to the corresponding blade shells to prevent the screws from disconnecting and falling down during the operation of the wind turbine blade.

To ensure the reliability of the connection between two blade segments, the joint may be regularly inspected. For example, the connector, e.g. a plurality of bolts, may be yearly inspected. This inspection may involve disconnecting the cover or fairing from the shells. Disconnecting the cover attached with glued or riveted screws may be time-consuming. Furthermore, the covers are not generally designed to be reconnected to the blade shells. In addition, removing the screws may enlarge the diameter of the holes of the blade shells into which the screws are secured. This may imply the use of bigger screws when the cover is reconnected to the blade shells. The connection of the cover to the blade shells can thus be weakened.

The present disclosure provides examples of systems and methods that at least partially resolve some of the aforementioned disadvantages.

### SUMMARY

In a first aspect, a wind turbine blade joint between a first blade segment and a second blade segment is provided. The wind turbine blade joint comprises a first blade segment portion and a second blade segment portion. The first blade segment portion comprises a first connecting portion having a first connecting edge. The second blade segment portion comprises a second connecting portion having a second connecting edge. The first connecting portion is configured to be connected to the second connecting portion.

The wind turbine blade joint further comprises an access window defined between the first connecting edge and the second connecting edge. In addition, the wind turbine blade joint comprises a connector connecting the first connecting portion to the second connecting portion. The connector is accessible from outside the wind turbine blade through the access window.

Furthermore, the wind turbine blade joint comprises a removable cover for covering the access window and a magnetic system arranged between the cover and the connector. The magnetic system is configured to create a magnetic field to attract the cover to the connector when the cover covers the access window.

According to this aspect, the removable cover is connected to the blade shells at least by the action of the magnetic field. This may prevent or at least reduce the number of screws for joining the removable cover to the blade shells. Covering the connector between blade segments may thus be simplified. Removing the cover is thus facilitated. Furthermore, even if screws are additionally used to ensure the connection of the cover to the blade shells, the position of these screws may be varied to avoid the use of bigger screws. Accordingly, the inspection of the connection between two blade segments may be more efficiently performed.

In a further aspect, a wind turbine blade is provided. The wind turbine blade comprises a first blade segment, a second blade segment and a wind turbine blade joint according connecting the second blade segment to the first blade segment. The wind turbine blade joint may be according to any of the examples herein.

In yet a further aspect, a method for joining a first blade segment to a second blade segment is provided. The method comprises providing a first blade segment and a second blade segment. The first blade segment comprises a first connecting portion having a first connecting edge. The second blade segment comprises a second connecting portion having a second connecting edge.

The method further comprises connecting the first connecting portion to the second connecting portion with a connector and forming an access window defined between the first connecting edge and the second connecting edge for accessing the connector from outside the wind turbine blade.

In addition, the method comprises covering the access window with a removable cover and arranging a magnetic system between the cover and the connector to create a magnetic field to attract the cover to connector.

Advantages derived from these aspects may be similar to those mentioned regarding the first aspect.

### BRIEF DESCRIPTION OF THE DRAWINGS

Non-limiting examples of the present disclosure will be described in the following, with reference to the appended drawings, in which:
Figure 1 illustrates a perspective view of a wind turbine according to one example;
Figure 2 shows a perspective view of a wind turbine blade according to one example;
Figure 3 shows a cross-sectional view of a wind turbine blade according to one example of the present disclosure;
Figure 4A schematically represents a wind turbine blade joint according to an example;
Figure 4B schematically represents a second blade segment portion according to an example;
Figures 5A and 5B respectively illustrate a cross-sectional view of a wind turbine blade joint according to an example;
Figures 6A - 6C respectively illustrate a cross-sectional view of a wind turbine blade joint according to an example of the present disclosure;
Figure 7 schematically represents a removable cover according to an example of the present disclosure;
Figures 8A and 8B respectively illustrate a wind turbine blade joint without and with a removable cover according to an example of the present disclosure; and
Figure 9 is a block diagram of a method for joining a first blade segment to a second blade segment according to one example of the present disclosure.

### DETAILED DESCRIPTION OF EXAMPLES

In these Figures, the same reference signs have been used to designate matching elements.

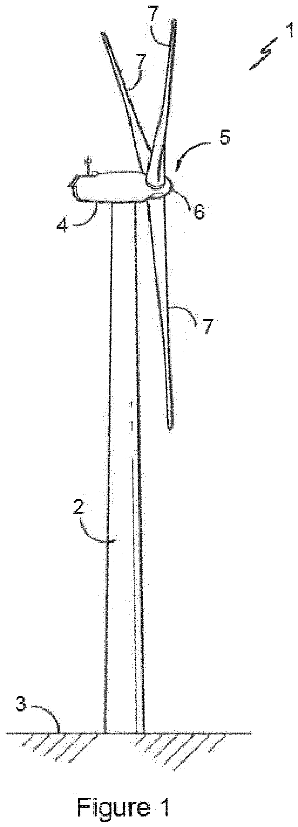

Figure 1 illustrates a perspective view of one example of a wind turbine 1. As shown, the wind turbine 1 includes a tower 2 extending from a support surface 3, a nacelle 4 mounted on the tower 2, and a rotor 5 coupled to the nacelle 4. The rotor 5 includes a rotatable hub 6 and at least one wind turbine blade 7 coupled to and extending outwardly from the rotor hub 6. For example, in the illustrated example, the rotor 5 includes three wind turbine blades 7. However, in an alternative example, the rotor 5 may include more or less than three blades 7. Each wind turbine blade 7 may be spaced from the rotor hub 6 to facilitate rotating the rotor 5 to enable kinetic energy to be transferred from the wind into usable mechanical energy, and subsequently, electrical energy. For instance, the rotor hub 6 may be rotatably coupled to an electric generator positioned within the nacelle 4 or forming part of the nacelle to permit electrical energy to be produced.

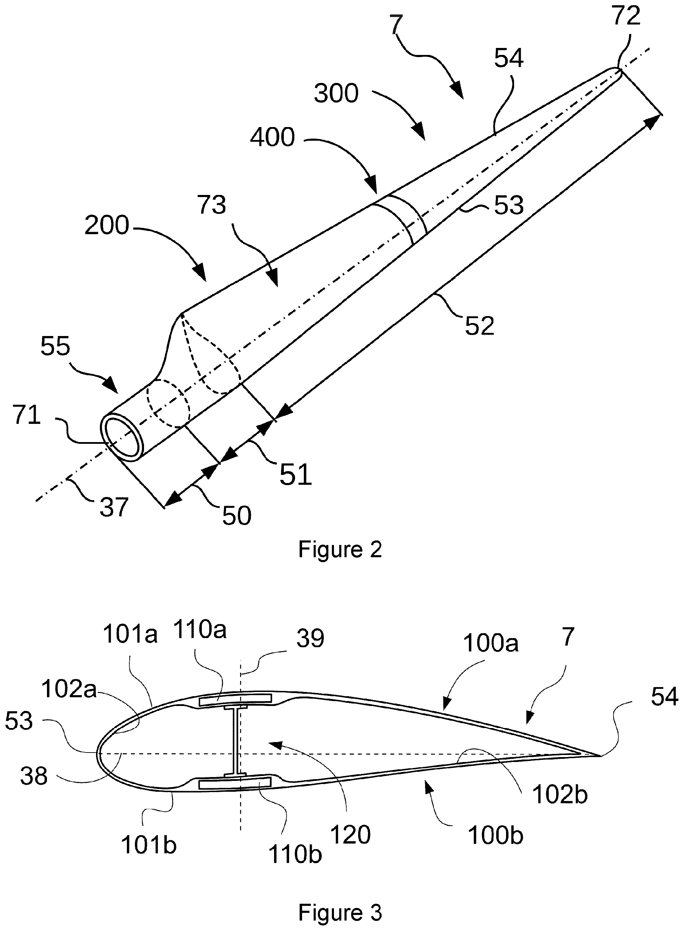

Figure 2 illustrates an example of a wind turbine blade 7. The wind turbine blade 7 extends in a longitudinal direction or lengthwise direction 37 from a blade root end 71 to a blade tip end 72. The blade 7 comprises a blade root region or portion 50 closest to the rotor hub, a profiled or an airfoil portion 52 furthest away from the rotor hub and a transition portion 51 between the blade root portion 50 and the airfoil portion 52. The blade 7 comprises a leading edge 53 facing the direction of rotation of the blade 7 when mounted on the rotor hub, and a trailing edge 54 facing the opposite direction of the leading edge 53.

The airfoil portion 52 has a shape designed to generate lift, whereas the blade root portion 50 has a circular or elliptical cross-section for structural considerations and easy mounting of the blade to the rotor hub. The diameter or the chord of the blade root portion 50 may be constant along the entire blade root portion 50. At the transition portion 51, the profile gradually changes from the circular or elliptical cross-section of the blade root portion 50 to the airfoil profile of the airfoil portion 52. The wind turbine blade 7 may be connected to the rotor hub through a blade root attachment portion 55.

The wind turbine blade 7 comprises a blade shell 73. The blade shell 73 comprises an outer side or surface that defines the external shape of the blade, e.g. the outer shape at the blade root portion and the outer shape at the airfoil portion. The blade shell 73 also comprises an inner side or surface that defines the internal volume of the blade and faces a load-carrying structure (not shown). The blade shell 73 may be made of fiber-reinforced polymer or plastics, e.g. glass fiber and/or carbon fiber.

The blade shell may be formed by a plurality of blade shell parts. The plurality of blade shell parts may be joined together to form the blade shell. The blade shell parts may be formed and then joined according to any of the examples herein disclosed. Resin infusion technology, e.g. RTM or VARTM, or prepreg technology may be used for manufacturing the blade shell parts.

The wind turbine blade 7 of this figure is a segmented or modular blade. The blade 7 comprises a first blade segment 200 and a second blade segment 300. The first blade segment 200 and the second blade segment are jointed through a wind turbine blade joint 400. The wind turbine blade joint may be according to any of the examples herein. The first blade segment 200 of this figure is a root-side blade segment and the second blade segment 300 a tip-side blade segment. In some examples, the wind turbine blade may comprise further blade segments joined through an additional wind turbine blade joint.

Figure 3 shows a cross-sectional view of a wind turbine blade 7 according to one example of the present disclosure. A suction side blade shell part or upper blade shell part 100a, and a pressure side blade shell part or lower blade shell part 100b extend from the leading edge 53 to the trailing edge 54. The wind turbine blade 7 further comprises a chord line 38 between the leading edge 53 and the trailing edge 54. The chord line 38 extends in an edgewise direction or chordwise direction. A flapwise direction 39 is substantially perpendicular to the chord line 38. The upper blade shell part 100a and the lower blade shell part 100b are joined, e.g. bonded, together along the leading edge 53 and the trailing edge 54.

The blade shell parts 100a, 100b respectively comprise an outer layer 101a, 101b and an inner layer 102a, 102b. The outer layers 101a, 101b define an outer shape of the blade shell part 100b and the inner layers 102a, 102b define an inner shape of the blade shell parts 100a, 100b. The upper blade shell part 100a of this example comprises an upper spar cap structure 110a embedded between the upper outer layer 101a and the upper inner layer 102a. Similarly, the lower blade shell part 100b comprises a lower spar cap structure 110b between the lower outer layer 101b and the lower inner layer 102b. The spar cap structures 110a, 110b structurally reinforce the corresponding blade shell parts 100a, 100b.

The outer layers 101a, 101b and the inner layers 102a, 102b may comprise glass fibers embedded in resin. For example, one or more glass fiber laminates may be arranged to form these layers. The fibers, e.g. glass fibers, may be oriented bidirectionally to enhance the torsional stiffness of the blade 7. In other examples, the fibers may be arranged unidirectionally or triaxially. In further examples, the inner and outer layers comprise laminates with unidirectional fibers and laminates with bidirectional fibers.

A core structure may be arranged between the outer layer 101a, 101b and the inner layer 102a, 102b in some parts of the blade shell part 100a, 100b. For example, a core structure may extend a portion between the spar cap structure 110a, 110b and the leading edge 53. Additionally, or alternatively, a core structure may extend a portion between the spar cap structure 110a, 110b and the trailing edge 54. The core structure generally increases the thickness of the blade shell part so as to improve the stiffness without an excessive weight increase. The core structure may be made from a lightweight material such as balsa, wood or polymer foam, or any combination of them. Blade shell parts of this kind may be known as sandwich panels.

The blade shell parts may be manufactured in a mold and then joined together to define the entire blade shell of the wind turbine blade 7. The fibers and/or the core structure may be embedded in resin. The reinforcing fibers and/or the core structure may be arranged on a mold surface of a blade shell part mold and resin may be fed through a resin infusion technology, e.g. VARTM. The reinforcing fibers may be glass fibers, carbon fibers, aramid, or basalt. Examples of resins may include epoxy, polyester, or vinyl ester resin. The orientation of the fibers of each of the layers may vary. For example, some layers comprise unidirectional fibers and other layers biaxial fibers. Some layers may also comprise triaxial fibers. The reinforcement fibers may be arranged in fabrics and/or in pultrusions.

The spar caps comprise reinforcing fibers, e.g. carbon and/or glass fibers. The fibers may be arranged in fabrics and/or in pultrusions. The spar caps may be prefabricated before being arranged on the blade shell part mold. The spar caps may be manufactured through a resin infusion technology in a dedicated spar cap mold. Alternatively, the fibers of the spar caps may be infused together with the fibers of the remaining parts of the blade shell part.

In this example, the wind turbine blade 7 comprises a reinforcing structure 120 arranged between the upper blade shell part 100a and the lower blade shell part 100b. The reinforcing structure 120 provides stiffness to the wind turbine blade. The reinforcing structure extends between the upper spar cap structure 110a and the lower spar cap structure 11 0b. The reinforcing structure of this example comprises a beam or web extending a length along the spanwise direction 37, e.g. between the root portion and the tip portion. The beam may comprise an upper flange and a lower flange. The upper flange is joined to the upper blade shell part 100a and the lower flange is joined to the lower blade shell part 100b. In further examples, the reinforcing structure comprises two or more webs extending between the flanges. This configuration may be generally known as a spar box configuration.

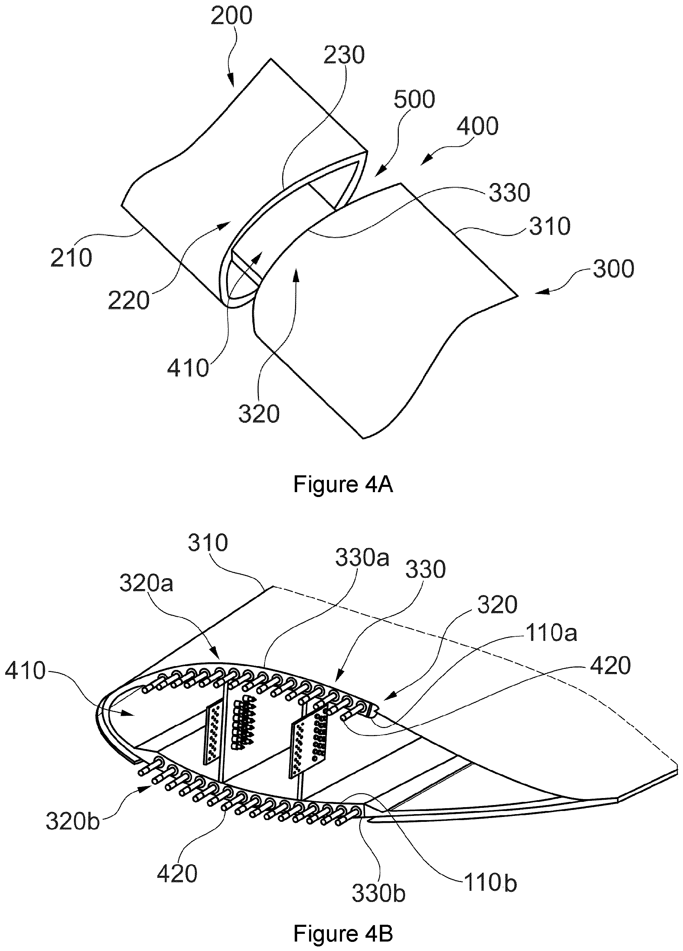

Figure 4A schematically represents a wind turbine blade joint according to an example. The wind turbine blade joint 400 connects a first blade segment 200 to a second blade segment 300.

The wind turbine blade joint 400 comprises a first blade segment portion 210 having a first connecting portion 220. The wind turbine blade joint further comprises a second blade portion 320 having a second connecting portion 220. The blade segment portions 210 and 310 are respectively the portion of the blade segments 200 and 300 adjacent to the joint wind turbine blade joint 400. The first connecting portion 220 is joined to the second connecting portion through a connector 410. The connecting portions 220, 320 may comprise spar caps 110a, 110b and/or reinforcing structures 120 extending between opposite spar caps. The first connecting portion 220 comprises a first connecting edge 230 facing a second connecting edge 330 of the second connecting portion 320.

The connecting edges 230 and 330 define an access window 500 between the blade segments 200 and 300. The connector 410 may be accessed through the access window 500. The access window 500 may be covered by a fairing or cover. For example, one or more covers may be arranged to the access window 500 so as to close the gap between the blade segments 200, 300. The connector 410 may thus be surrounded by one or more covers. In some examples, the cover or one of the covers may be a removable cover according to any of the examples herein.

Figure 4B schematically represents a second blade segment portion according to an example. The second blade segment portion 310 of this example may be similar to a first blade segment portion.

The second blade segment portion 310 comprises a second connecting portion 320 forming a first connecting edge. The connecting portion of this example comprises an upper connecting portion 320a and a lower connecting portion 320b. The upper connecting portion 320a comprises the upper spar structure 110a and the lower connecting portion 320b comprises the lower spar structure 110b. The spar caps 110a, 110b of the second blade segment may be connected to the spar caps of the first blade segment. The

A connector 410 may be used for connecting the upper spar caps 110a and the lower spar caps 110b. In this example, the connector 410 comprises a plurality of fasteners 420 to connect spar caps of two different blade segments.

In this example, the fasteners 420 comprise an end secured on the spar caps of the second blade segment portion 310. In this example, the opposite end of the fasteners 420 are configured to be connected to the spar caps of the first blade segment portion.

The fasteners 420 may be bolts having a thread on the ends. These threads may be secured on inserts arranged in the spar caps. In other examples, the fasteners may be attached to the spar caps through a T-bolt connection. In further examples, a sleeve or an intermediate piece may be used for connecting fasteners of different blade segments 200, 300.

The fasteners 420 may be manufactured from a ferromagnetic material, e.g. steel. The fasteners 420 may thus be ferromagnetic components. The connector 410 of this example thus comprises a plurality of ferromagnetic components.

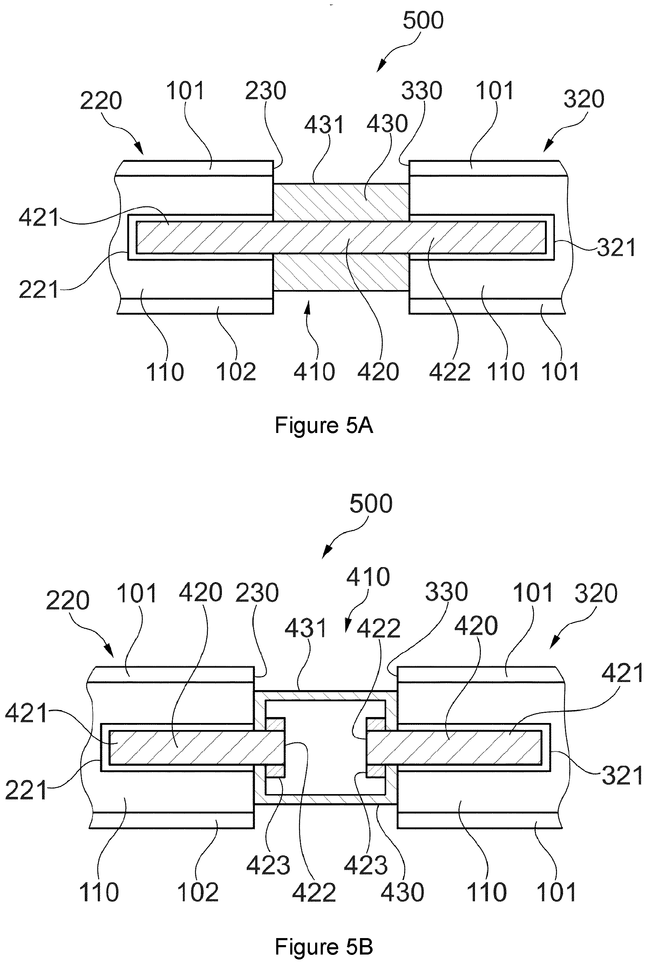

Figures 5A and 5B respectively illustrate a cross-sectional view of a wind turbine blade joint according to an example. In these examples, a first connecting portion 220 of a first blade segment is connected to the second connecting portion 320 of the second blade segment through the connector 410.

The connecting portions 220, 320 of these figures comprise a spar cap 110. The spar caps 110 are arranged within the outer layer 101 and the inner layer 102. In this figures, the first connecting edge 230 and the second connecting edge 330 are defined by the layers 101, 102 and the spar caps 110. The connecting edges extend from the inner layer 102 to the outer layer 101 and form the side or end of the corresponding blade segment. Between the first connecting edge 230 and the second connecting edge 330 a gap is formed. This gap may be used to form an access window 500. This gap may be closed by one or more covers. An access window may be left to allow access to the connector 410. This access window may be cover by a removably cover according to any of the examples herein.

The connector 410 of these examples comprises ferromagnetic components. In other examples, the connector may comprise composite elements and/or plastic components.

The connector 410 of these examples comprises a plurality of fasteners 420 to connect the spar caps 110. The fasteners 420 of these figures are partially surrounded by a sleeve 430. The fasteners extend from a first end 421 to a second end 422.

In these examples, the spar caps 110 comprises inserts 221, 321 to receive the fasteners 420. The inserts 221, 321 are attached to the spar caps 110. For example, the inserts may be glued to the fibers of the spar caps. In other examples, the inserts 221, 321 may be infused together with the spar caps. The inserts 221, 321 may be provided with an internal thread to secure an end of the fasteners 420. In other examples, the fasteners may be secured to the spar caps through an alternative method, e.g. with T-bolts.

In figure 5A, the fastener(s) 420 extends from the inserts 221 of the first connecting portion 220 to the inserts 321 of the second connecting portion 320. The fasteners of this example are stud bolts having a thread at both ends 421, 422. As these stud bolts are metallic, the stud bolts of this example are ferromagnetic components.

In the example of figure 5A, a portion of the fastener(s) 420 is surrounded by a sleeve 430. The connector 410 may thus comprise a plurality of sleeves 430. Each of these sleeves 430 surrounds a portion of the corresponding fastener 420, i.e. a central portion of the fasteners. The sleeves 430 of this example may be used to prestress the fasteners 420. The sleeves of this figure comprise an upper and a lower part and the fastener is arranged therebetween.

In figure 5B, the sleeves 430 are used to connect opposite fasteners 420. The fasteners 420 of figure 5B comprises a first end 421 secured on the corresponding insert 221, 321. The second end 422 of these fasteners is secured on the corresponding lateral sides of the sleeves 430. The fasteners 420 may be bolt studs. The second end 422 of the fasteners 420 passes through an opening formed at each of the lateral sides of the sleeves 430 and a screw 423 is threaded at the second end 422 of the fasteners 420. In other examples, a bolt may be alternatively used.

The sleeves 430 of figures 5A and 5B are made from a ferromagnetic material. Accordingly, the sleeves of these examples are ferromagnetic components of the connector 410. In these examples, the sleeves comprise an outer surface 431 to face the outside of the blade (or the cover when installed). The outer surface 431 of these examples is flat.

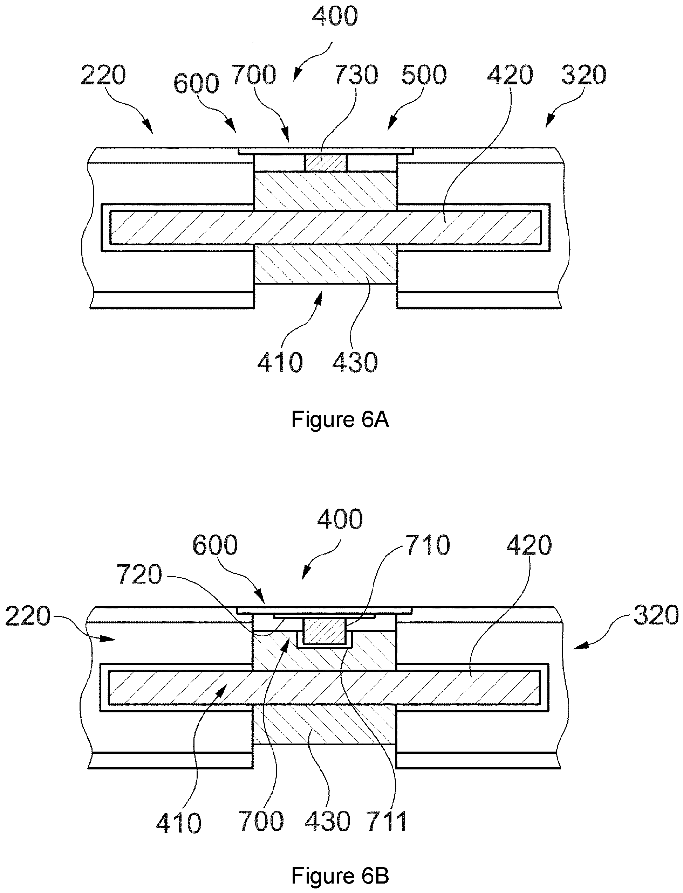

Figures 6A - 6C respectively illustrate a cross-sectional view of a wind turbine blade joint according to an example of the present disclosure.

The wind turbine blade joint 400 of these examples comprises a connector 410 having a plurality of fasteners 420 extending from the first connecting portion 220 to the second connecting portion 320. The central portion of these fasteners is enclosed by a sleeve 430 with a flat outer surface. However, in other examples, the connector may be according to any of the examples herein, e.g. according to the example of Figure 5B.

In these figures, the access window 500 is covered by a removable cover 600. The removable cover 600 extends between the first connecting portion 220 and the second connecting portion 320 so as to close the access window. In this figure, the removable cover comprises a body having a first side that engages the first connecting edge 230 and a second side that engages the second connecting edge 330. A smooth transition on the outer surface may thus be provided between the first blade segment 200 and the second blade 300. The

In some examples, the first side and/or the second side of the removable cover 600 may comprise a step to engage the corresponding connecting edge 230, 330. Alternatively, or additionally, the first connecting edge 230 and/or the second connecting edge 330 may comprise a step to engage the corresponding first or second side of the removable cover 600.

The removable cover 600 may be manufactured from a composite material, e.g. similar to the blade shells. In some examples, the removable cover 600 may be from plastic.

The wind turbine blade joint 400 of these figures further comprises a magnetic system 700 arranged between the cover 600 and the connector 410. In these examples, the magnetic system 700 creates a magnetic field to attract the removable cover 600 to the connector 410. The magnetic system 700 may thus retain the cover 600 closing the access window 500. The magnetic system 700 may thus prevent, or at least reduce, using additional fasteners to attach the removable cover 600 to the blade shell. In addition, the magnetic system may further allow to use other joining methods, such as snap-fit connections.

In figure 6A, the magnetic system 700 comprises a cover magnet 730 attached to the cover and one or more ferromagnetic components of the connector 410. The ferromagnetic components of the connector 410 of this figure are the fasteners 420 and the sleeves 430. The fasteners 420 and the sleeves 430 of this figure are made from a ferromagnetic material.

The cover magnet 730 of this example creates a magnetic field that attracts the ferromagnetic components of the connector 410, i.e. the fasteners 420 and the sleeves 430.

The cover magnet 730 of this example is arranged at a central portion between the first side and the second side. The cover magnet 730 of this example protrudes from an inner surface of the body of the cover 600. In this example, when the removable cover 600 covers the access window 500, the cover magnet 730 may rest on the sleeve 430 of the connector 410.

The cover magnet 730 may be bonded to the removable cover 600. For example, the removable cover 600 and the cover magnet 730 may be infused together. In further examples, the cover magnet 730 may be glued to the removable cover 600.

In figure 6B, the magnetic system comprises a connector magnet 710 attached to the connector 410 and a ferromagnetic component 720 arranged at the removable cover 600. The ferromagnetic component 720 of this example is a ferromagnetic plate, e.g. steel plate. The ferromagnetic plate may be attached to the inner surface of the body of the removable cover 600, e.g. glued.

The connector 410 of this figure comprises a receptacle 711 that receives a portion of the connector magnet 710. The connector magnet 710 may fit the receptacle 711. An adhesive may be additionally used to attach the connector magnet 710 to the receptacle 711. An insulated layer may be arranged on the walls of the receptacle 711 to magnetically isolate the connector magnet 710 from the connector 410. The connector magnet 710 of this example protrudes from the connector 410, e.g. from the outer surface of the sleeve 430, towards the removable cover 600. The upper portion of the connector magnet 710 may be in contact with the ferromagnetic component 720 of the removable cover 600 when the cover closes the access window 500.

In some examples, the magnetic system 700 may comprise a plurality of connector magnets 710. In some of these examples, the cover may comprise a plurality of ferromagnetic plates to be magnetically attracted by the plurality of connector magnets.

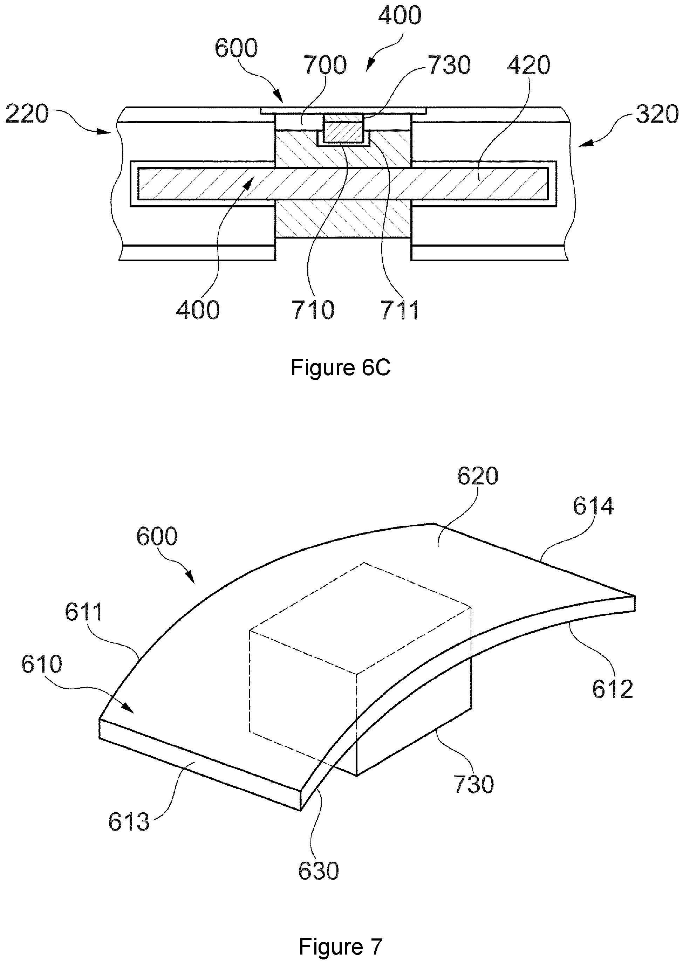

In figure 6C, the magnetic system 700 comprises a cover magnet 730 and a connector magnet 710. The polarity of the cover magnet 730 is opposite to the polarity of the connector magnet 710 so as to create a magnetic field to attract the magnets 730, 710 to each other.

The cover 600 and the cover magnet 730 of Figure 6C may be as described with respect to Figure 6A. The connector 410 and the connector magnet 710 may be as described with respect to Figure 6B. In some examples, the magnetic system 700 may comprise a plurality of pairs of cover magnets 730 and connector magnets 710.

Figure 7 schematically represents a removable cover according to an example of the present disclosure. The removable cover 600 of this example comprises a body 610 having a first side 611 and a second side 612 opposite to the first side 611. In this example, the first side 611 is configured to engage the first connecting edge 230 of the first connecting portion 220 of the first blade segment 200 and the second side 612 is configured to engage the second connecting edge 330 of the second connecting portion 320 of the second blade segment 300.

The body 610 of this example extends between the first side 611 and the second side in a first direction. The first direction is parallel to the lengthwise direction 37 of the wind turbine blade when the removable cover 600 is mounted on the blade joint 400. The body 610 thus extends between the first connecting portion 220 and the second connecting portion 320.

The body 610 of this figure further comprises a third side 613 and a fourth side 614, opposite to the third side 613. The third side 613 and the fourth side 614 of this example extend between the first side 611 and the second side 612. The third side 613 and the fourth side are respectively configured to engage a third edge and a fourth edge of the access window so as to close the access window.

In this figure, the body 610 comprises a curved shape between the third side 613 and the fourth side 614 to fit the outer surface of the wind turbine blade. The body 610 extends between the third side 613 and the fourth side 614 to follow the airfoil shape of the blade.

The body 610 of this figure comprises an outer surface 620 configured to face an outside of the wind turbine blade and an inner surface 630 to face an inside of the wind turbine blade, e.g. the connector 410. The cover magnet 730 protrudes from the inner surfaces to face the connector 410 when the cover is mounted on the access window.

The cover magnet 730 is arranged between the first side 611 and the second side 612. The cover magnet 730 may thus be arranged at a central portion of the body 610 along the first direction. A gap is formed between the cover magnet 730 and the first side 611 and the second side 612. This position may facilitate the magnetic engagement with the ferromagnetic components of the connector 410.

In some examples, the cover 600 may comprise a plurality of cover magnets 730. For example, a plurality of cover magnets 730 may be arranged between the first side 611 and the second side 612. Additionally, or alternatively, a plurality of cover magnets 730 may be arranged between the third side 613 and the fourth side 614.

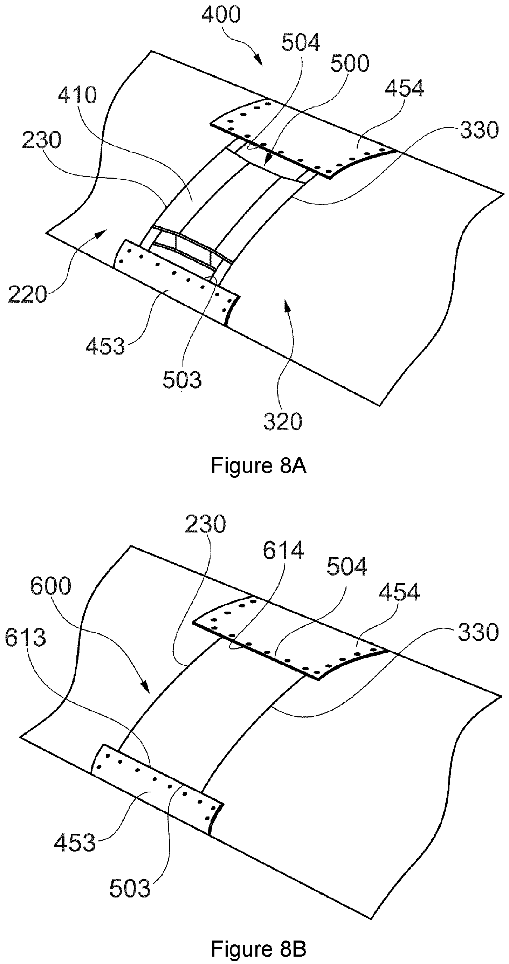

Figures 8A and 8B respectively illustrate a wind turbine blade joint without and with a removable cover according to an example of the present disclosure.

In Figure 8A the connector 410 is accessible through the access window 500 from the outside of the wind turbine blade. However, in Figure 8B the access window 500 is closed by the removable cover 600.

The shape of the access window 500 is defined by the first connecting edge 230 of the first connecting portion 220 and by the second connecting edge 330 of the second connecting portion 320. The first connecting edge 230 is closer to the blade root and the second connecting edge 330 is closer to the blade tip. The first connecting edge 230 and the second connecting edge 330 comprises a flange forming a step configuration. The corresponding sides of the cover may rest on these flanges.

The access window 500 of this example further comprises a third edge 503 and a fourth edge 504. In this example, the third edge 503 is closer to the leading edge and the fourth edge to the trailing edge.

The third edge 503 and the fourth edge 504 may be defined by one or more covers or fairings extending between the first blade segment portion 210 and the second blade segment portion 310. In this example, the wind turbine blade joint 400 comprises a leading edge cover 453 and a trailing edge cover 454. The leading edge cover 453 and the trailing edge cover 454 are fixedly attached to the blade shells. A different number of fixed covers may also be suitable. For example, the wind turbine blade joint 400 may comprise a single fixed cover. In other examples, three or more fixed covers may be arranged to cover the gap between the first connecting edge 230 and the second connecting edge 330. These fixed covers may be screwed to the blade shells.

In this example, the access window 500 is arranged on the suction side of the wind turbine blade. However, in other examples, the access window 500 may be, alternatively or additionally, arranged at the pressure side of the wind turbine blade.

In figure 8B, the removable cover 600 is mounted to close the access window 500. Although not shown in this figure, the removable cover 600 comprises a cover magnet 730 to be in contact with the connector 410. The first side 611 and the second side 612 of the cover 600 engage the first connecting edge 230 and the second connecting edge 330 of the blade segments 200, 300. In this figure, the third side 613 and the fourth side 614 of the cover 600 respectively engage the third edge 503 and the fourth edge 504 of the access window 500.

In some examples, the removable cover 600 may comprise a copper layer. The copper layer may engage a copper layer arranged at a portion of an outer shell of the wind turbine blade. A continuous copper layer may thus be formed. The copper layer may comprise a copper mesh. In some examples, the copper layer may be integrated within the body 610 of the removable cover 600. In other examples, the copper layer may be arranged on the inner surface of the removable cover 600.

In some examples, in addition to magnetic attachment, an additional joining component be used to enhance the connection of the removable cover to the blade shells. The additional joining component may comprise adhesive, perimeter magnets, a plurality of snap fits and/or a plurality of fasteners. These fasteners may be strategically arranged to reduce their number. In other examples, perimeter magnets may be arranged on the cover to be attracted by other magnets arranged on the flange of the first connecting edge 230 and/or on the second connecting edge 330.

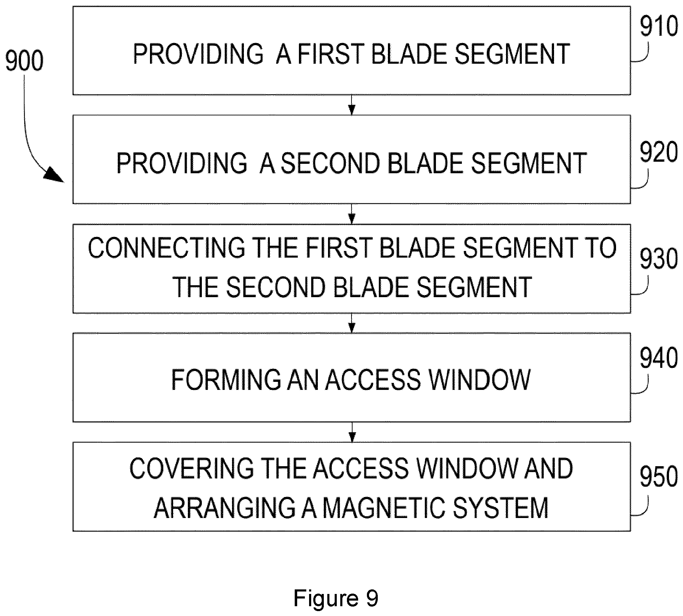

Figure 9 is a block diagram of a method for joining a first blade segment to a second blade segment according to one example of the present disclosure. The first blade segment 200 and the second blade segment 300 may be according to any of the examples herein.

The method 900 comprises providing a first blade segment 200 having a first connecting portion 220, as represented at block 910. The method 900 further comprises providing a second blade segment 300 having a second connecting portion 320, as represented at block 920. The first connecting portion 220 comprises a first connecting edge 230 and the second connecting portion 320 comprises a second connecting edge 330. The first connecting portion 220 and the second connecting portion may be according to any of the examples herein.

At block 930, connecting the first connecting portion 220 to the second connecting portion 320 with a connector 410 is represented. The connector 410 may be according to any of the examples herein. For example, the connector 410 may comprise a plurality of fasteners 420 and sleeves 430 to connect the spar caps of the blade segments. The fasteners 420 and/or the sleeves 430 may be ferromagnetic components.

The method 900 further comprises forming an access window 500 defined between the first connecting edge 230 and the second connecting edge 330 for accessing the connector 410 from outside the wind turbine blade, as represented at block 940. The access window 500 may be formed by fixedly connecting one or more covers to the blade shells to cover a space between the first connecting edge 230 and the second connecting edge 330. These fixed cover(s) may be screwed and/or glued to the blade shells of the blade segments. The fixed cover may be according to any of the examples herein.

At block 950, covering the access window 500 with a removable cover 600 and arranging a magnetic system 700 between the cover 600 and the connector 410 to create a magnetic field to attract the cover 600 to connector 410 is represented. The removable cover 600 may thus be at least partially attached to the blade through the magnetic field. The removable cover 600 and the magnetic system may be according to any of the examples herein. For example, the removable cover 600 may comprise one or more cover magnets 730. The cover magnets may be positioned to face the ferromagnetic components of the connector 410, e.g. fasteners 420 and/or sleeves 430.

A wind turbine blade joint 400 with easy access to the connector 410 may thus be provided. In some examples, an additional joining component, e.g. a plurality of fasteners, may be used to connect the removable cover 600 to the access window 500. The magnetic system 700 reduces the number of these fasteners (if any). The removability of the cover is thus maintained.

For reasons of completeness, various aspects of the present disclosure are set out in the following numbered clauses:
Clause 1: A wind turbine blade joint between a first blade segment and a second blade segment, the wind turbine blade joint comprising:
   a first blade segment portion having a first connecting portion, wherein the first connecting portion comprises a first connecting edge;
   a second blade segment portion having a second connecting portion, wherein the first connecting portion is configured to be connected to the second connecting portion, wherein the second connecting portion comprises a second connecting edge;
   an access window defined between the first connecting edge and the second connecting edge;
   a connector connecting the first connecting portion to the second connecting portion, wherein the connector is accessible from outside the wind turbine blade through the access window;
   a removable cover for covering the access window;
   a magnetic system arranged between the cover and the connector, wherein the magnetic system is configured to create a magnetic field to attract the cover to the connector when the cover covers the access window.
Clause 2: The wind turbine blade joint according to clause 1, wherein the magnetic system comprises:
   a connector magnet attached to the connector; and
   a ferromagnetic component arranged at the cover.
Clause 3: The wind turbine blade joint according to clause 2, wherein the connector comprises a receptacle to receive at least a portion of the connector magnet.
Clause 4: The wind turbine blade joint according to any of clauses 2-3, wherein the connector magnet protrudes from the connector towards the cover.
Clause 5: The wind turbine blade joint according to clause 1, wherein the magnetic system comprises:
   a cover magnet attached to the cover; and
   a connector magnet attached to the connector; wherein a polarity of the connector magnet is opposite to a polarity of the cover magnet.
Clause 6: The wind turbine blade joint according to clause 1, wherein the connector comprises one or more ferromagnetic components; and wherein the magnetic system comprises:
   a cover magnet attached to the cover; and
   the one or more ferromagnetic components of the connector.
Clause 7: The wind turbine blade joint according to clause 6, wherein the cover magnet is bonded to the cover.
Clause 8: The wind turbine blade joint according to any of clauses 6 - 7, wherein the ferromagnetic components comprise a plurality of fasteners to connect the first connecting portion to the second connecting portion.
Clause 9: The wind turbine blade joint according to clause 8, wherein the ferromagnetic components comprise a plurality of sleeves, each of the sleeves surrounding at least a portion of one of the fasteners.
Clause 10: The wind turbine blade joint according to clause 9, wherein the sleeves comprise an outer surface configured to face the cover, and wherein the outer surface is flat.
Clause 11: The wind turbine blade joint according to any of clauses 6 - 10, wherein the cover comprises:
   a body comprising:
   a first side configured to engage the first connecting edge of the first connecting portion of the first blade segment; and
   a second side, opposite to the first side, and configured to engage the second connecting edge of the second connecting portion of the second blade segment, and
   wherein the cover magnet is arranged between the first side and the second side of the body.
Clause 12: The wind turbine blade joint according to clause 11, wherein the body of the cover comprises:
   an outer surface configured to face an outside of the wind turbine blade;
   an inner surface configured to face an inside of the wind turbine blade; and
   wherein the magnet protrudes from the inner surface of the body to face the connector.
Clause 13: The wind turbine blade joint according to any of clauses 11 - 12, wherein the body extends between the first side and the second side in a first direction, wherein the first direction is parallel to the lengthwise direction of the wind turbine blade.
Clause 14: The wind turbine blade joint according to any of clauses 11 - 13, wherein the body of the cover comprises a third side and a fourth side, opposite to the third end; and wherein the third side and the fourth side extend between the first side and the second side;
   wherein the access window comprises a third edge and a fourth edge, wherein the third edge and the fourth edge are defined by one or more covers extending between the first blade segment portion and the second blade segment portion; and
   wherein the third side and a fourth side of the body are respectively configured to engage the third edge and the fourth edge of the access window.
Clause 15: The wind turbine blade joint according to clause 14, wherein the body comprises a curved shape between the third side and the fourth side to fit the outer surface of the wind turbine blade.
Clause 16: The wind turbine blade joint according to any of clauses 1 - 15, wherein the wind turbine blade joint comprises an additional joining component to connect the removable cover to the access window.
Clause 17: The wind turbine blade joint according to any of clauses 1 - 16, wherein the magnetic system comprises a plurality of magnets.
Clause 18: The wind turbine blade joint according to any of clauses 1 - 17, wherein the cover comprises a copper layer.
Clause 19: A wind turbine blade comprising:
   a first blade segment;
   a second blade segment; and
   a wind turbine blade joint according to any of clauses 1 - 18, connecting the second blade segment to the first blade segment.
Clause 20: A method for joining a first blade segment to a second blade segment, the method comprising:
   providing a first blade segment having a first connecting portion, wherein the first connecting portion comprises a first connecting edge;
   providing a second blade segment having a second connecting portion, wherein the second connecting portion comprises a second connecting edge;
   connecting the first connecting portion to the second connecting portion with a connector;
   forming an access window defined between the first connecting edge and the second connecting edge for accessing the connector from outside the wind turbine blade; and
   covering the access window with a removable cover and arranging a magnetic system between the cover and the connector to create a magnetic field to attract the cover to connector.

This written description uses examples to disclose the invention, including the preferred embodiments, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal languages of the claims. Aspects from the various embodiments described, as well as other known equivalents for each such aspects, can be mixed and matched by one of ordinary skill in the art to construct additional embodiments and techniques in accordance with principles of this application. If reference signs related to drawings are placed in parentheses in a claim, they are solely for attempting to increase the intelligibility of the claim, and shall not be construed as limiting the scope of the claim.

## Claims

1. A wind turbine blade joint (400) between a first blade segment (200) and a second blade segment (300), the wind turbine blade joint (400) comprising:
a first blade segment portion (210) having a first connecting portion (220), wherein the first connecting portion (220) comprises a first connecting edge (230);
a second blade segment portion (310) having a second connecting portion (320), wherein the first connecting portion (220) is configured to be connected to the second connecting portion (320), wherein the second connecting portion (320) comprises a second connecting edge (330);
an access window (500) defined between the first connecting edge (230) and the second connecting edge (330);
a connector (410) connecting the first connecting portion (220) to the second connecting portion (320), wherein the connector (410) is accessible from outside the wind turbine blade (7) through the access window (500);
a removable cover (600) for covering the access window (500);
a magnetic system (700) arranged between the cover (600) and the connector (410), wherein the magnetic system (700) is configured to create a magnetic field to attract the cover (600) to the connector (410) when the cover (600) covers the access window (500).

2. The wind turbine blade joint (400) according to claim 1, wherein the magnetic system (700) comprises:
a connector magnet (710) attached to the connector (410); and
a ferromagnetic component (720) arranged at the removable cover (600).

3. The wind turbine blade joint (400) according to any of claims 1-2, wherein the connector magnet (710) protrudes from the connector (410) towards the removable cover (600).

4. The wind turbine blade joint (400) according to claim 1, wherein the magnetic system (700) comprises:
a cover magnet (730) attached to the removable cover (600); and
a connector magnet (710) attached to the connector (410); wherein a polarity of the connector magnet (710) is opposite to a polarity of the cover magnet (730).

5. The wind turbine blade joint (400) according to claim 1, wherein the connector (410) comprises one or more ferromagnetic components (420, 430); and wherein the magnetic system (700) comprises:
a cover magnet (730) attached to the removable cover (600); and
the one or more ferromagnetic components of the connector (410).

6. The wind turbine blade joint (400) according to claim 5, wherein the ferromagnetic components comprise a plurality of fasteners (420) to connect the first connecting portion (220) to the second connecting portion (320).

7. The wind turbine blade joint (400) according to claim 6, wherein the ferromagnetic components comprise a plurality of sleeves (430), each of the sleeves (430) surrounding at least a portion of one of the fasteners (420).

8. The wind turbine blade joint (400) according to claim 7, wherein the sleeves (430) comprise an outer surface (431) configured to face the cover (600), and wherein the outer surface (431) is flat.

9. The wind turbine blade joint (400) according to any of claims 5-8, wherein the cover (600) comprises:
a body (610) comprising:
a first side (611) configured to engage the first connecting edge (230) of the first connecting portion (220) of the first blade segment portion (210); and
a second side (612), opposite to the first side (611), and configured to engage the second connecting edge (330) of the second connecting portion (320) of the second blade segment portion (310), and
wherein the cover magnet (730) is arranged between the first side (611) and the second side (612) of the body (610).

10. The wind turbine blade joint (400) according to claim 9, wherein the body (610) of the cover (600) comprises:
an outer surface (620) configured to face an outside of the wind turbine blade (7);
an inner surface (630) configured to face an inside of the wind turbine blade (7);
and
wherein the cover magnet (730) protrudes from the inner surface (630) of the body (610) to face the connector (410).

11. The wind turbine blade joint (400) according to claim 10, wherein the body (610) of the cover (600) comprises a third side (613) and a fourth side (614), opposite to the third side (613); and wherein the third side (613) and the fourth side (614) extend between the first side (611) and the second side (612);
wherein the access window (500) comprises a third edge (503) and a fourth edge (504), wherein the third edge (503) and the fourth edge (504) are defined by one or more covers extending between the first blade segment portion (210) and the second blade segment portion (310); and
wherein the third side (613) and a fourth side (614) of the body (610) are respectively configured to engage the third edge (503) and the fourth edge (504) of the access window (500).

12. The wind turbine blade joint (400) according to claim 11, wherein the body (610) comprises a curved shape between the third side (613) and the fourth side (614) to fit the outer surface of the wind turbine blade (7).

13. The wind turbine blade joint (400) according to any of claims 1 - 12, wherein the wind turbine blade joint (400) comprises an additional joining component to connect the removable cover (600) to the access window (500).

14. A wind turbine blade (7) comprising:
a first blade segment (200);
a second blade segment (300); and
a wind turbine blade joint (400) according to any of claims 1 - 13, connecting the second blade segment (300) to the first blade segment (200).

15. A method (900) for joining a first blade segment (200) to a second blade segment (300), the method (900) comprising:
providing (910) a first blade segment (200) having a first connecting portion (220), wherein the first connecting portion (220) comprises a first connecting edge (230);
providing (920) a second blade segment (300) having a second connecting portion (320), wherein the second connecting portion (320) comprises a second connecting edge (330);
connecting (930) the first connecting portion (220) to the second connecting portion (320) with a connector (410);
forming (940) an access window (500) defined between the first connecting edge (230) and the second connecting edge (330) for accessing the connector (410) from outside the wind turbine blade (7); and
covering (950) the access window (500) with a removable cover (600) and arranging a magnetic system (700) between the cover (600) and the connector (410) to create a magnetic field to attract the cover (600) to connector (410).
